# EUROPÄISCHE PATENTSCHRIFT

(11) **EP 2 262 071 B1**
(45) Veröffentlichungstag und Bekanntmachung des Hinweises auf die Patenterteilung: **14.03.2018**
(21) Anmeldenummer: 10182490.2
(22) Anmeldetag: 07.04.2006
(51) Int. Cl.: H02G 3/06, H05K 9/00

(54) **KABELDURCHFÜHRUNG**
CABLE FEEDTHROUGH
TRAVERSÉE DE CÂBLE

(30) Priorität: 08.04.2005 DE 102005017688
(43) Veröffentlichungstag der Anmeldung: 15.12.2010
(62) Teilanmeldung aus: 06007427.5
(73) Patentinhaber: Lapp Engineering & Co., 6330 Cham (CH)
(72) Erfinder: Drotleff, Rolf, 71263, Weil der Stadt (DE)
(74) Vertreter: Hoeger, Stellrecht & Partner Patentanwälte mbB

(56) Entgegenhaltungen:
- WO-A-2005/031935
- DE-A1- 3 345 942
- DE-A1- 19 615 602
- DE-U1-202004 005 457
- US-B1- 6 376 766

## Beschreibung

Die Erfindung betrifft eine Kabeldurchführung, umfassend einen Gehäusestutzen, einen an dem Gehäusestutzen vorgesehenen Befestigungsabschnitt, mit welchem der Gehäusestutzen an einem Wandabschnitt eines Geräts befestigbar ist, und ein einen Kabelschirm eines durch die Kabeldurchführung hindurchgeführten Kabels kontaktierendes Schirmkontaktelement. Aus der DE 20 2004 005457 ist eine Kabeldurchführung nach dem Oberbegriff des Anspruchs 1 bekannt.

Aus der DE 33 45 942 A1 ist eine Kabeldurchführung bekannt, bei welcher eine Schirmkontaktierung erfolgt, aber nicht um den Kabelschirm elektrisch leitend mit dem Wandabschnitt des Geräts zu verbinden, sondern um diesen kapazitiv von der Wand zu trennen.
Weitere bislang bekannte Kabeldurchführungen sehen vor, dass das Schirmkontaktelement innerhalb des Gehäusestutzens angeordnet ist und haben den Nachteil, dass der Gehäusestutzen und das Schirmkontaktelement aneinander angepasst sein müssen und somit eine spezielle Vormontage erforderlich ist. Der Erfindung liegt daher die Aufgabe zugrunde, eine Kabeldurchführung der gattungsgemäßen Art derart zu verbessern, dass das Schirmkontaktelement möglichst einfach am Gehäusestutzen montierbar ist.

Diese Aufgabe wird bei einer Kabeldurchführung mit den Merkmalen des Anspruchs 1 gelöst.

Der Vorteil der erfindungsgemäßen Lösung ist darin zu sehen, dass durch die Festlegung des Schirmkontaktelements an der Außenumfangsseite des Befestigungsabschnitts eine einfache Montage desselben möglich ist, und zwar dann, wenn die Kabeldurchführung bereits an dem Wandabschnitt des Geräts montiert wird.

Somit entfällt jede Vormontage des Schirmkontaktelements.

Außerdem bietet das erfindungsgemäße Schirmkontaktelement den großen Vorteil, dass der Schirmkontakt unmittelbar einerseits den Wandabschnitt des Geräts elektrisch kontaktiert und andererseits den Kabelschirm elektrisch kontaktiert, so dass die Ausbildung des Befestigungsabschnitts für die elektrische Verbindung zwischen dem Gehäuse und dem Kabelschirm irrelevant ist.

Darüber hinaus ist dadurch, dass der Halteabschnitt an der Außenumfangsseite des Befestigungsabschnitts festlegbar ist, eine einfache Montage des Schirmkontaktelements bei der Montage der Kabeldurchführung als Ganzes möglich und außerdem kann dabei in einfacher Weise auch sichergestellt werden, dass das Schirmkontaktelement in ausreichendem elektrischen Kontakt mit dem Wandabschnitt des Geräts steht.

Prinzipiell wäre es denkbar, den Halteabschnitt des Schirmkontaktelements auf dem Befestigungsabschnitt kraftschlüssig, beispielsweise durch eine Klemmung festzulegen.

Eine besonders günstige Lösung sieht jedoch vor, dass der Halteabschnitt des Schirmkontaktelements auf dem Befestigungsabschnitt formschlüssig festlegbar ist.

Eine derartige formschlüssige Festlegung des Halteabschnitts hat den großen Vorteil, dass damit eine sehr einfache und zuverlässige Fixierung des Halteabschnitts auf dem Befestigungsabschnitt erreichbar ist.

Prinzipiell wäre es dabei denkbar, den Halteabschnitt durch Rastelemente auf dem Befestigungsabschnitt zu fixieren.

Dabei kann lediglich ein formschlüssiges Einrasten auf dem Außengewinde oder aber auch ein Aufschrauben des Halterings vorgesehen sein.

Eine besonders günstige Lösung sieht jedoch vor, dass der Halteabschnitt des Schirmkontaktelements auf ein Außengewinde des Befestigungsabschnitts aufsetzbar ist.

Um zu vermeiden, dass eine elektrische Verbindung zu dem Wandbereich über den Befestigungsabschnitt erfolgen muss, ist vorzugsweise vorgesehen, dass der Halteabschnitt eine einer Seite des Wandabschnitts des Gehäuses zugewandte und an dieser anlegbare Gehäusekontaktfläche aufweist. Die Erfindung sieht vor, dass das Schirmkontaktelement mit einem Halteabschnitt an einer Außenumfangsseite des Befestigungsabschnitts festlegbar ist und dass das Schirmkontaktelement die Außenumfangsseite des Befestigungsabschnitts in Richtung einer Endfläche desselben übergreifende Kontaktbügel zur Kontaktierung des Kabelschirms aufweist.

Besonders günstig ist es dabei, wenn die Gehäusekontaktfläche an der Seite des Wandabschnitts kraftbeaufschlagt anlegbar ist.

Dies ist einfach dadurch zu realisieren, dass die Kontaktfläche entweder selbst formschlüssig auf dem Befestigungsabschnitt festlegbar ist oder durch ein zusätzliches Fixierelement abgestützt ist, um kraftbeaufschlagt an die Seite des Wandabschnitts angelegt werden zu können.

Grundsätzlich ist es im Rahmen der erfindungsgemäßen Lösung denkbar, den Halteabschnitt so auszubilden, dass dieser primär zur Fixierung des Schirmkontaktelements an dem Gehäusestutzen dient, jedoch unabhängig von der Art der Montage des Gehäusestutzens an dem Wandabschnitt ist.

Eine besonders günstige Lösung sieht jedoch vor, dass der Halteabschnitt als Haltering ausgebildet ist, mit welchem der Befestigungsabschnitt an dem Wandbereich festlegbar ist.

Das heißt, dass in diesem Fall der Halteabschnitt nicht nur dazu dient, das Schirmkontaktelement an dem Befestigungsabschnitt festzulegen, sondern auch gleichzeitig dazu dient, den Befestigungsabschnitt und somit den Gehäusestutzen an dem Wandbereich zu fixieren.

Insbesondere ist es dabei vorteilhaft, wenn der Haltering ein Innengewinde aufweist, welches auf ein Außengewinde des Befestigungsabschnitts aufschraubbar ist, um somit einerseits das Schirmkontaktelement an der Kabeldurchführung zu fixieren und andererseits die Kabeldurchführung selbst an dem Wandbereich des Gehäuses festzulegen.

Besonders zweckmäßig ist es dabei, wenn eine der Seite des Wandabschnitts zugewandte Fläche des Halterings die Kontaktfläche darstellt, so dass bereits beim Fixieren des Gehäusestutzens mittels des Halterings in einfacher Weise eine elektrische Verbindung zwischen dem Schirmkontaktelement und dem Wandabschnitt des Gehäuses herstellbar ist.

Hinsichtlich der Ausbildung und Anordnung der Kontaktbügel wurden im Zusammenhang mit dem bislang beschriebenen Ausführungsbeispiel keine näheren Angaben gemacht. So sieht eine vorteilhafte Lösung vor, dass die Kontaktbügel mit ihren den Kabelschirm kontaktierenden Bereichen sich außerhalb des Befestigungsabschnitts erstrecken.

Das heißt, dass in diesem Fall das Schirmkontaktelement sehr einfach ausgebildet sein kann und insbesondere nicht an den Befestigungsabschnitt oder einen Durchbruch desselben angepasst werden muss, da auch die Kontaktierung des Kabelschirms über die Kontaktbügel außerhalb des Befestigungsabschnitts erfolgt.

Diese Lösung hat ferner den Vorteil, dass damit die Kontaktierung des Kabelschirms einfach einsehbar und überprüfbar ist und im Übrigen auch die Möglichkeit besteht, in einfacher Weise die Schirmkontaktierung wieder zu lösen, falls eine Demontage erfolgen muss.

Eine besonders vorteilhafte konstruktive Lösung sieht vor, dass die Kontaktbügel mit ihren den Kabelschirm kontaktierenden Bereichen auf einer der Kabelfixierung gegenüberliegenden Seite des Befestigungsabschnitts liegen.

Hinsichtlich der Funktion der Kontaktbügel bei der Kontaktierung des Kabelschirms wurden bislang keine näheren Angaben gemacht.

So sieht ein vorteilhaftes Ausführungsbeispiel vor, dass die Kontaktbügel radial zu einer Mittelachse des Gehäusestutzens federnd bewegbare Klemmschenkel für den Kabelschirm umfassen.

Besonders günstig ist es dabei, wenn das Schirmkontaktelement den Kabelschirm scherenartig einklemmende Klemmschenkel aufweist.

Durch ein derartiges scherenartiges Einklemmen des Kabelschirms durch die Klemmschenkel ist eine zuverlässige elektrische Kontaktierung des Kabelschirms durch das Schirmkontaktelement realisierbar.

Hinsichtlich der Ausbildung der Kontaktbügel wurden im Zusammenhang mit der bisherigen Erläuterung der einzelnen Ausführungsbeispiele keine näheren Angaben gemacht. So sieht eine vorteilhafte Lösung vor, dass das Schirmkontaktelement mindestens zwei Kontaktbügel aufweist, die auf einer ersten Seite des Kabelschirms ein Federelement aufweisen und auf einer zweiten, gegenüberliegenden Seite des Kabelschirms diesen mit einer Kontaktfläche beaufschlagen.

Eine derartige Ausbildung der Kontaktbügel lässt sich insbesondere dann konstruktiv einfach realisieren, wenn die Kontaktbügel übereinanderliegende Durchbrüche zur Durchführung des Kabels mit dem Kabelschirm aufweisen, die federelastisch im Sinne einer Verkleinerung einer Überlappungsfläche der Durchbrüche beaufschlagt sind.

Damit ist in einfacher Weise ein derartiges scherenartiges Einklemmen des Kabelschirms realisierbar.

Insbesondere lässt sich dies konstruktiv einfach dadurch realisieren, dass die Kontaktbügel den Kabelschirm mit einem Randabschnitt der jeweiligen Durchbrüche beaufschlagen.

Ein derartiges Einklemmen des Kabelschirms durch die Kontaktbügel lässt sich konstruktiv einfach dann realisieren, wenn die Kontaktbügel ungefähr parallel zu einer quer zur Mittelachse des Gehäusestutzens verlaufenden Fläche erstreckende Klemmschenkel aufweisen.

Eine alternative Lösung zu der bisherigen Ausbildung der Kontaktbügel sieht vor, dass die den Kabelschirm kontaktierenden Kontaktbügel sich in einen zentralen Durchbruch des Befestigungsabschnitts hineinerstrecken.

Vorzugsweise weisen dabei die Kontaktbügel in Richtung einer Mittelachse des Befestigungselements gewölbte Kontaktschenkel auf, welche den Kontakt mit dem Kabelschirm herstellen.

Dabei sind die Kontaktbügel so ausgebildet, dass sie von dem Halteabschnitt ausgehend die Endfläche des Befestigungsabschnitts umgreifen, um in den zentralen Durchbruch eingreifen zu können.

Dabei können die Kontaktbügel in dem gesamten Gehäusestutzen zu einer Kontaktierung des Kabelschirms führen.

Besonders günstig ist es dabei, wenn die Kontaktbügel mit ihren den Kabelschirm kontaktierenden Schirmkontaktflächen innerhalb des Befestigungselements liegen.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine perspektivische teilweise geschnittene Ansicht eines ersten Ausführungsbeispiels einer erfindungsgemäßen Kabeldurchführung mit Schirmkontaktelement;
- Fig. 2: eine perspektivische Ansicht des ersten Ausführungsbeispiels mit Blick in Richtung eines Pfeils A in Fig. 1;
- Fig. 3: eine Draufsicht auf das erste Ausführungsbeispiel der erfindungsgemäßen Kabeldurchführung mit Blick in Richtung des Pfeils B in Fig. 2;
- Fig. 4: eine perspektivische teilweise geschnittene Ansicht ähnlich Fig. 1 eines zweiten Ausführungsbeispiels einer erfindungsgemäßen Kabeldurchführung mit Schirmkontakt;
- Fig. 5: eine perspektivische Ansicht ähnlich Fig. 1 eines dritten Ausführungsbeispiels einer erfindungsgemäßen Kabeldurchführung und
- Fig. 6: eine perspektivische Darstellung ähnlich Fig. 5 des dritten Ausführungsbeispiels der erfindungsgemäßen Kabeldurchführung ohne Schnittdarstellung.

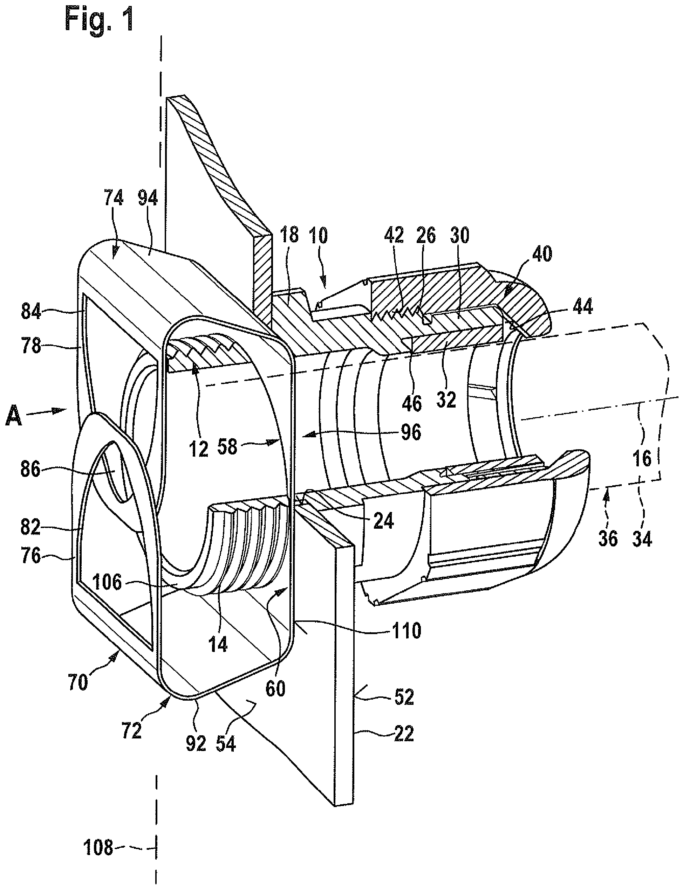

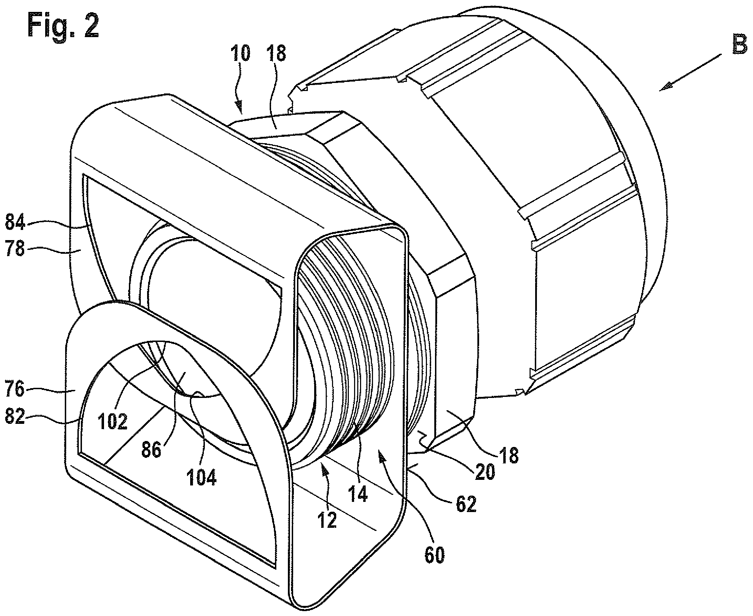

Ein in Fig. 1 dargestelltes erstes Ausführungsbeispiel einer erfindungsgemäßen Kabeldurchführung umfasst einen als Ganzes mit 10 bezeichneten Gehäusestutzen, welcher an einem Ende einen Befestigungsabschnitt 12 aufweist, der ein Außengewinde 14 trägt. An den Befestigungsabschnitt 12 schließt sich ein radial zu einer Mittelachse 16 des Gehäusestutzens über den Befestigungsabschnitt 12 überstehender Druckbund 18 an, welcher, wie in Fig. 2 dargestellt, eine dem Befestigungsabschnitt 12 zugewandte Druckfläche 20 trägt, mit welcher der Druckbund 18 an einem Wandabschnitt 22 eines Gerätes anlegbar ist, wenn der Befestigungsabschnitt 12 durch eine Öffnung 24 in dem Wandabschnitt 22 hindurchgeführt ist.

Auf einer dem Befestigungsabschnitt 12 gegenüberliegenden Seite des Druckbunds 18 umfasst der Gehäusestutzen ein weiteres Außengewinde 26 und bildet auf einer dem Druckbund 18 gegenüberliegenden Seite des Außengewindes 26 einen Lamellenkorb 30.

Der Lamellenkorb 30 umschließt seinerseits eine Ringdichtung 32, die an einen Mantel 34 eines durch die Kabeldurchführung hindurchzuführenden Kabels 36 bei Beaufschlagen des Lamellenkorbs 30 in Richtung der Mittelachse 16 anlegbar ist.

Zum Beaufschlagen des Lamellenkorbs 30 ist eine als Ganzes mit 40 bezeichnete Hutmutter vorgesehen, welche mit einem Innengewinde 42 auf das Außengewinde 26 aufschraubbar ist, den Lamellenkorb 30 übergreift und eine konische Druckfläche 44 aufweist, mit welcher der Lamellenkorb 30 beim Aufschrauben der Hutmutter 40 mit dem Innengewinde 42 auf das Außengewinde 26 in Richtung der Mittelachse 16 beaufschlagbar ist, um die Ringdichtung 32 an dem Mantel 34 des Kabels 36 anzulegen.

Ferner umfasst der Gehäusestutzen noch eine Dichtkante 46, gegen welche die Ringdichtung 32 ebenfalls anlegbar ist, um einen dichten Abschluss einerseits gegenüber dem Gehäusestutzen 10 und andererseits gegenüber dem Mantel 34 des Kabels 36 zu erhalten.

Um den Druckbund 18 an eine erste Seite 52 des Wandabschnitts 22 anzulegen und in Anlage zu halten, wird der Befestigungsabschnitt 12 des Gehäusestutzens 10 durch die Öffnung 24 von der ersten Seite 52 in Richtung einer zweiten Seite 54 hindurchgeführt, so dass das Außengewinde 14 des Befestigungsabschnitts 12 über die zweite Seite 54 des Wandabschnitts 22 übersteht.

Zur Festlegung des Befestigungsabschnitts 12 ist auf das Außengewinde 14 ein mit einem Innengewinde 58 versehener Haltering 60 aufschraubbar, welcher mit einer Haltefläche 62 an die zweite Seite 54 des Wandabschnitts 22 anlegbar ist, um den Wandabschnitt 22 zwischen der Haltefläche 62 des Halterings 60 und der Druckfläche 20 des Druckbundes 18 einzuspannen und somit den Gehäusestutzen 10 an dem Wandabschnitt 22 zu fixieren.

Der Haltering 60 kann - insoweit als er zur Fixierung des Gehäusestutzens 10 am Wandabschnitt 22 dient - im einfachsten Fall als auf das Außengewinde 14 aufschraubbare Mutter ausgebildet sein, wie dies beim Stand der Technik der Fall ist.

Bei dem in Fig. 1 und 2 dargestellten Ausführungsbeispiel ist der Haltering 60 jedoch Bestandteil eines als Ganzes mit 70 bezeichneten Schirmkontaktelements, welches beispielsweise zwei an den Haltering 60 angeformte Kontaktbügel 72, 74 aufweist.

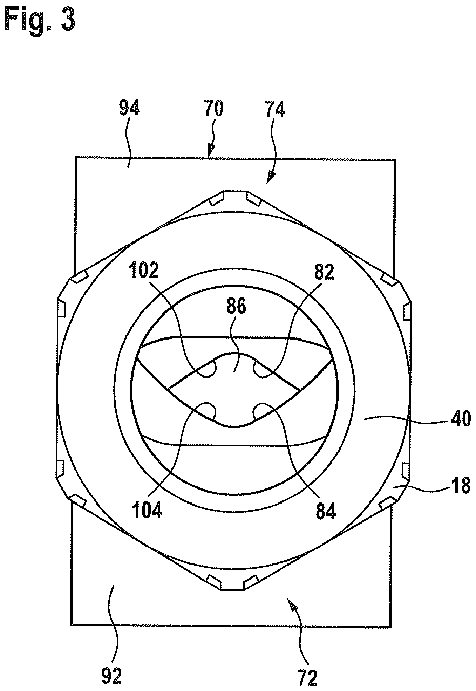

Die Kontaktbügel 72, 74 übergreifen bei dem ersten Ausführungsbeispiel den Befestigungsabschnitt 12 und bilden im Abstand von dem Befestigungsabschnitt 12 aufeinanderliegende Klemmschenkel 76, 78 mit Durchbrüchen 82, 84 die, wie in Fig. 1, 2 und 3 dargestellt, derart überlappen, dass eine von den Durchbrüchen 82, 84 gemeinsam abgedeckte Überlappungsfläche 86 kleiner ist als eine Querschnittsfläche eines von den Kontaktbügeln, 72, 74 zu kontaktierenden Kabelschirms.

Ausgehend von ihrer Ausgangsstellung lassen sich die Klemmschenkel 76, 78 durch Beaufschlagen von die Klemmschenkel 76, 78 haltenden und diese mit dem Haltering 60 verbindenden federelastischen Bogenstücken 92, 94 derart relativ zueinander bewegen, dass die Durchbrüche 82, 84 eine größere Überlappungsfläche 86 umschließen, so dass das durch einen zentralen Durchbruch 96 des Gehäusestutzens hindurchgeführte Kabel 36 mit einem freigelegten Kabelschirm durch die einander überlappenden Durchbrüche 82, 84 hindurchgeschoben werden kann, da die Überlappungsfläche 86 größer ist als eine Querschnittsfläche des Kabels 36.

Entfällt dabei die Beaufschlagung der Bogenstücke 92, 94, so haben die Kontaktschenkel 76, 78 die Tendenz in ihre Ausgangsstellung zurückzugehen und beaufschlagen dabei mit ihren einander gegenüberliegenden und die Überlappungsfläche 86 umgrenzenden Randabschnitten 102, 104 den Kabelschirm auf einander gegenüberliegenden Seiten, so dass der Kabelschirm zwischen den Randabschnitten 102, 104 aufgrund der Federwirkung der Bogenstücke 92, 94 eingeklemmt und somit zuverlässig kontaktiert wird.

Vorzugsweise liegen bei dem ersten Ausführungsbeispiel die Klemmschenkel 76, 78 im Abstand von einer endseitigen Stirnfläche 106 des Befestigungsabschnitts 12 und erstrecken sich ungefähr parallel zu einer Ebene 108, die ungefähr senkrecht zur Mittelachse 16 verläuft.

Ferner liegen zweckmäßigerweise die Klemmschenkel 76, 78 unmittelbar aneinander an, so dass die Randabschnitte 102, 104 der Durchbrüche 82, 84 scherenähnlich aufeinander gegenüberliegende Seiten der Abschirmung einwirken, um diese einzuklemmen.

Bei dem dargestellten ersten Ausführungsbeispiel sind der Haltering 60 sowie die Kontaktbügel 72, 74 mit den Bogenstücken 92, 94 sowie den Klemmschenkeln 76, 78 einstückig ausgebildet, insbesondere aus einem gestanzten und gebogenen sowie elektrisch leitenden Flachmaterialteil ausgebildet, und somit einfach herstellbar.

Das Schirmkontaktelement 70 stellt dabei eine elektrische Verbindung zwischen dem Kabelschirm und dem Wandabschnitt 22 dar, wobei der Haltering 60 mit einer Gehäusekontaktfläche 110 an der zweiten Seite 54 des Wandabschnitts 22 anliegt und somit eine elektrisch leitende Verbindung zwischen dem Schirmkontaktelement 70 und dem ebenfalls elektrisch leitend ausgebildeten Wandabschnitt 22 ermöglicht, wobei im Bereich der Anlage der Gehäusekontaktfläche 110 der Wandabschnitt 22 ebenfalls eine elektrisch leitend kontaktierbare Oberfläche aufweisen muss.

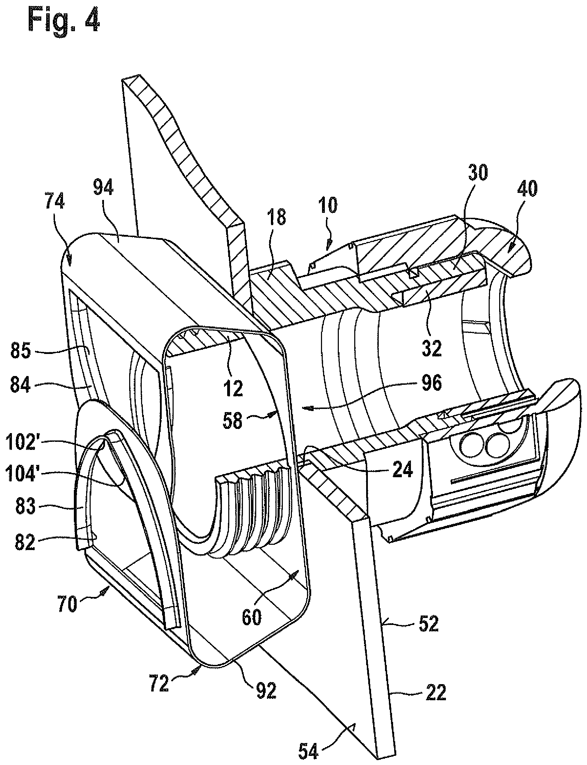

Bei einem zweiten Ausführungsbeispiel einer erfindungsgemäßen Kabeldurchführung, dargestellt in Fig. 4, sind diejenigen Elemente, die mit denen des ersten Ausführungsbeispiels identisch sind, mit denselben Bezugszeichen versehen, so dass diesbezüglich auf die Ausführungen zum ersten Ausführungsbeispiel vollinhaltlich Bezug genommen werden kann.

Im Gegensatz zum ersten Ausführungsbeispiel sind bei dem zweiten Ausführungsbeispiel die Durchbrüche 82, 84 der Klemmschenkel 76, 78 mit umgebogenen Randbereichen 83, 85 versehen, so dass die durch die Randbereiche 83und 85 verbreiterten Randabschnitte 102' und 104' großflächiger an dem zu kontaktierenden Kabelschirm anliegen und beim Einklemmen desselben eine weit geringere, wenn nicht keine, Scherwirkung auf den Kabelboden ausüben.

Im Übrigen wird vollinhaltlich auf die Ausführungen zum ersten Ausführungsbeispiel Bezug genommen.

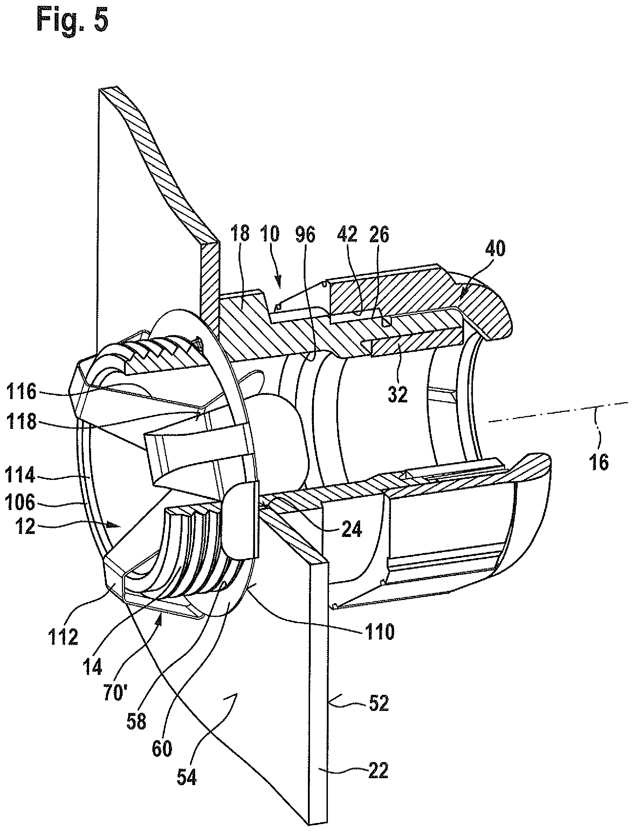

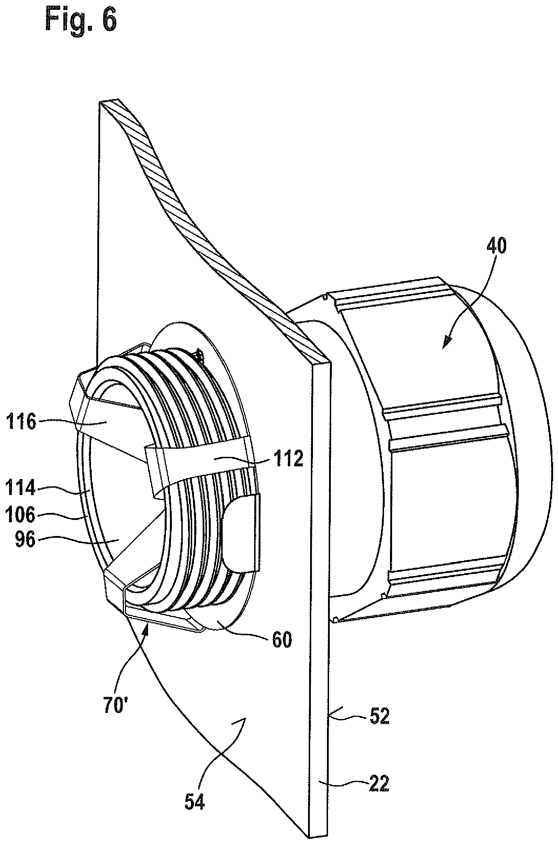

Bei einem dritten Ausführungsbeispiel, dargestellt in Fig. 5 und Fig. 6, ist der Gehäusestutzen 10 mit der Hutmutter 40, und der Ringdichtung 32 in gleicher Weise ausgebildet wie beim ersten Ausführungsbeispiel, so dass diesbezüglich vollinhaltlich auf die Ausführungen zum ersten Ausführungsbeispiel Bezug genommen wird.

Darüber hinaus ist auch der Befestigungsabschnitt 12 mit dem Außengewinde 14 ebenfalls identisch ausgebildet.

Im Gegensatz dazu umfasst das Schirmkontaktelement 70' zwar den Haltering 60, der ebenfalls mit dem Innengewinde 58 auf das Außengewinde 14 aufschraubbar ist, und von diesem ausgehend erstrecken sich Kontaktbügel 112, die in gleicher Weise wie die Kontaktbügel 72, 74 den Befestigungsabschnitt 12 mit dem Außengewinde 14 übergreifen, dann jedoch die Stirnfläche 106 des Befestigungsabschnitts 12 ebenfalls umgreifend über eine an die Stirnfläche 106 angrenzende Öffnung 114 in den zentralen Durchbruch des Gehäusestutzens 10 eingreifen und in diesem in Richtung der Mittelachse 16 konvexe Kontaktschenkel 116 mit Schirmkontaktflächen 118 bilden, die an einer Außenseite eines Kabelschirms eines durch den zentralen Durchbruch 96 hindurchgeschobenen Kabels 36 anlegbar sind, um diesen zu kontaktieren.

Auch bei dem dritten Ausführungsbeispiel weist der Haltering 60 die Gehäusekontaktfläche 110 auf, welche in gleicher Weise wie beim ersten Ausführungsbeispiel den elektrischen Kontakt zwischen dem Schirmkontaktelement 70' und dem Wandabschnitt 22 des Geräts herstellt.

Bei den erfindungsgemäßen Kabeldurchführungen gemäß dem ersten, zweiten und dritten Ausführungsbeispiel kann der Gehäusestutzen 10 selbst aus unterschiedlichen Materialien sein. Beispielsweise ist es denkbar, den Gehäusestutzen 10 aus einem leitenden Material, beispielsweise Metall herzustellen. Da jedoch der Haltering 60 des Schirmkontaktelements 70 stets in der Lage ist, einen elektrischen Kontakt zum Wandabschnitt 22 oder zu einer anders ausgeführten Masseverbindung herzustellen, kann der Gehäusestutzen 10 aber auch aus einem isolierenden Material, das heißt Kunststoff hergestellt sein, da das Schirmkontaktelement 70, 70' allein in der Lage ist, die elektrisch leitende Verbindung zwischen dem Kabelschirm und dem Wandabschnitt 22 oder der anders gearteten Masseverbindung herzustellen.

## Patentansprüche

1. Kabeldurchführung umfassend
einen Gehäusestutzen (10),
einen an dem Gehäusestutzen (10) vorgesehenen Befestigungsabschnitt (12), mit welchem der Gehäusestutzen (10) an einem Wandabschnitt (22) eines Geräts befestigbar ist,
und ein einen Kabelschirm eines durch die Kabeldurchführung hindurchgeführten Kabels (36) kontaktierendes Schirmkontaktelement (70), welches einerseits den Wandabschnitt (22) des Geräts elektrisch kontaktiert und andererseits den Kabelschirm elektrisch kontaktiert, und eine an dem Gehäusestutzen (10) vorgesehene Kabelfixierung (30, 32, 40),
**dadurch gekennzeichnet, dass** das Schirmkontaktelement (70) mit einem Halteabschnitt (60) an einer Außenumfangsseite (14) des Befestigungsabschnitts (12) festgelegt ist, und dass das Schirmkontaktelement (70) die Außenumfangsseite (14) des Befestigungsabschnitts (12) in Richtung einer Endfläche (106) desselben übergreifende Kontaktbügel (72, 74, 112) zur Kontaktierung des Kabelschirms aufweist.

2. Kabeldurchführung nach Anspruch 1, **dadurch gekennzeichnet, dass** der Halteabschnitt (60) des Schirmkontaktelements (70) auf dem Befestigungsabschnitt (12) formschlüssig festlegbar ist.

3. Kabeldurchführung nach Anspruch 2, **dadurch gekennzeichnet, dass** der Halteabschnitt (60) des Schirmkontaktelements (70) auf ein Außengewinde (14) des Befestigungsabschnitts (12) aufsetzbar ist.

4. Kabeldurchführung nach einem der voranstehenden Ansprüche, **dadurch gekennzeichnet, dass** der Halteabschnitt (60) eine einer Seite (54) des Wandabschnitts (22) des Gehäuses zugewandte und an dieser anlegbare Gehäusekontaktfläche (110) aufweist.

5. Kabeldurchführung nach einem der voranstehenden Ansprüche, **dadurch gekennzeichnet, dass** der Halteabschnitt als Haltering (60) ausgebildet ist, mit welchem der Befestigungsabschnitt (12) an dem Wandbereich (22) festlegbar ist.

6. Kabeldurchführung nach Anspruch 5, **dadurch gekennzeichnet, dass** eine der Seite (54) des Wandabschnitts (22) zugewandte Fläche des Halterings (60) die Kontaktfläche darstellt.

7. Kabeldurchführung nach einem der voranstehenden Ansprüche, **dadurch gekennzeichnet, dass** die Kontaktbügel (72, 74) mit ihren den Kabelschirm kontaktierenden Bereichen (102, 104) sich außerhalb des Befestigungsabschnitts (12) erstrecken.

8. Kabeldurchführung nach Anspruch 7, **dadurch gekennzeichnet, dass** die Kontaktbügel (72, 74) mit ihren den Kabelschirm kontaktierenden Bereichen (102, 104) auf einer der Kabelfixierung (30, 32, 40) gegenüberliegenden Seite des Befestigungsabschnitts (12) liegen.

9. Kabeldurchführung nach Anspruch 7 oder 8, **dadurch gekennzeichnet, dass** die Kontaktbügel (72, 74) radial zu einer Mittelachse (10) des Gehäusestutzens (10) federnd bewegbare Klemmschenkel (76, 78) für den Kabelschirm umfassen.

10. Kabeldurchführung nach Anspruch 9, **dadurch gekennzeichnet, dass** die Kontaktbügel (72, 74) sich ungefähr parallel zu einer quer zur Mittelachse (16) des Gehäusestutzens (10) verlaufenden Fläche (108) erstreckende Klemmschenkel (76, 78) aufweisen.

11. Kabeldurchführung nach einem der Ansprüche 1 bis 6, **dadurch gekennzeichnet, dass** die den Kabelschirm kontaktierenden Kontaktbügel (112) sich in einen zentralen Durchbruch (96) des Befestigungsabschnitts (12) hineinerstrecken.

12. Kabeldurchführung nach Anspruch 11, **dadurch gekennzeichnet, dass** die Kontaktbügel (112) in Richtung einer Mittelachse (16) des Befestigungselements (12) gewölbte Kontaktschenkel (116) aufweisen.

13. Kabeldurchführung nach Anspruch 11 oder 12, **dadurch gekennzeichnet, dass** die Kontaktbügel (112) von dem Halteabschnitt (60) ausgehend die Endfläche (106) des Befestigungsabschnitts (12) umgreifen.

14. Kabeldurchführung nach einem der Ansprüche 11 bis 13, **dadurch gekennzeichnet, dass** die Kontaktbügel (112) mit ihren den Kabelschirm kontaktierenden Schirmkontaktflächen (118) innerhalb des Befestigungsabschnitt (12) liegen.

## Claims

1. Cable feedthrough comprising
a housing connection piece (10),
a fastening section (12) provided on the housing connection piece (10) for securing the housing connection piece (10) to a wall section (22) of an appliance,
and a shield contact element (70) making contact with a cable shield of a cable (36) guided through the cable feedthrough, said shield contact element making electrical contact, on the one hand, with the wall section (22) of the appliance and making electrical contact, on the other hand, with the cable shield, and a cable fixing member (30, 32, 40) provided on the housing connection piece (10),
**characterized in that** the shield contact element (70) is fixed with a holding section (60) to an outer circumferential side (14) of the fastening section (12) and that the shield contact element (70) has contact brackets (72, 74, 112) for making contact with the cable shield, said brackets engaging over the outer circumferential side (14) of the fastening section (12) in the direction of an end surface (106) thereof.

2. Cable feedthrough as defined in claim 1, **characterized in that** the holding section (60) of the shield contact element (70) is fixable to the fastening section (12) in a form-locking manner.

3. Cable feedthrough as defined in claim 2, **characterized in that** the holding section (60) of the shield contact element (70) is attachable to an outer thread (14) of the fastening section (12).

4. Cable feedthrough as defined in any one of the preceding claims, **characterized in that** the holding section (60) has a housing contact surface (110) facing one side (54) of the wall section (22) of the housing and engaging on it.

5. Cable feedthrough as defined in any one of the preceding claims, **characterized in that** the holding section is designed as a holding ring (60) for securing the fastening section (12) to the wall region (22).

6. Cable feedthrough as defined in claim 5, **characterized in that** a surface of the holding ring (60) facing the side (54) of the wall section (22) represents the contact surface.

7. Cable feedthrough as defined in any one of the preceding claims, **characterized in that** the contact brackets (72, 74) extend outside the fastening section (12) with their areas (102, 104) making contact with the cable shield.

8. Cable feedthrough as defined in claim 7, **characterized in that** the contact brackets (72, 74) are located with their areas (102, 104) making contact with the cable shield on a side of the fastening section (12) located opposite the cable fixing member (30, 32, 40).

9. Cable feedthrough as defined in claim 7 or 8, **characterized in that** the contact brackets (72, 74) comprise clamping arms (76, 78) for the cable shield movable radially to a central axis (10) of the housing connection piece (10) in a flexible manner.

10. Cable feedthrough as defined in claim 9, **characterized in that** the contact brackets (72, 74) have clamping arms (76, 78) extending approximately parallel to a surface (108) running transversely to the central axis (16) of the housing connection piece (10).

11. Cable feedthrough as defined in any one of claims 1 to 6, **characterized in that** the contact brackets (112) making contact with the cable shield extend into a central opening (96) of the fastening section (12).

12. Cable feedthrough as defined in claim 11, **characterized in that** the contact brackets (112) have contact arms (116) curved in the direction of a central axis (16) of the fastening element (12).

13. Cable feedthrough as defined in claim 11 or 12, **characterized in that** the contact brackets (112) engage around the end surface (106) of the fastening section (12) starting from the holding section (60).

14. Cable feedthrough as defined in any one of claims 11 to 13, **characterized in that** the contact brackets (112) are located within the fastening section (12) with their shield contact surfaces (118) making contact with the cable shield.

## Revendications

1. Traversée de câble comprenant un raccord de boîtier (10), un tronçon de fixation (12) prévu sur le raccord de boîtier (10), tronçon avec lequel le raccord de boîtier (10) peut être fixé sur un tronçon de paroi (22) d'un appareil, et un élément de contact de blindage (70) contactant un blindage de câble d'un câble (36) passant au travers de la traversée de câble, lequel élément de contact de blindage établit, d'une part, un contact électrique avec le tronçon de paroi (22) de l'appareil et, d'autre part, un contact électrique avec le blindage de câble, et une fixation de câble (30, 32, 40) prévue sur le raccord de boîtier (10), **caractérisée en ce que** l'élément de contact de blindage (70) est immobilisé sur un côté circonférentiel extérieur (14) du tronçon de fixation (12) avec un tronçon de maintien (60), et **en ce que** l'élément de contact de blindage (70) présente des étriers de contact (72, 74, 112) enjambant le côté circonférentiel extérieur (14) du tronçon de fixation (12) en direction d'une face d'extrémité (106) de celui-ci pour établir le contact avec le blindage de câble.

2. Traversée de câble selon la revendication 1, **caractérisé en ce que** le tronçon de maintien (60) de l'élément de contact de blindage (70) peut être immobilisé, par complémentarité de forme, sur le tronçon de fixation (12).

3. Traversée de câble selon la revendication 2, **caractérisée en ce que** le tronçon de maintien (60) de l'élément de contact de blindage (70) peut être posé sur un filetage extérieur (14) du tronçon de fixation (12).

4. Traversée de câble selon l'une quelconque des revendications précédentes, **caractérisée en ce que** le tronçon de maintien (60) présente une face de contact de boîtier (110) tournée vers un côté (54) du tronçon de paroi (22) du boîtier et pouvant être plaquée contre celui-ci.

5. Traversée de câble selon l'une quelconque des revendications précédentes, **caractérisée en ce que** le tronçon de maintien est conçu en tant que bague de maintien (60) avec laquelle le tronçon de fixation (12) peut être immobilisé contre la zone de paroi (22).

6. Traversée de câble selon la revendication 5, **caractérisée en ce qu'**une face de la bague de maintien (60), dirigée vers le côté (54) du tronçon de paroi (22), constitue la face de contact.

7. Traversée de câble selon l'une quelconque des revendications précédentes, **caractérisée en ce que** les zones (102, 104) en contact avec le blindage de câble des étriers de contact (72, 74) s'étendent à l'extérieur du tronçon de fixation (12).

8. Traversée de câble selon la revendication 7, **caractérisée en ce que** les zones (102, 104) en contact avec le blindage de câble des étriers de contact (72, 74) se trouvent sur l'un des côtés du tronçon de fixation (12) opposé à la fixation de câble (30, 32, 40).

9. Traversée de câble selon la revendication 7 ou la revendication 8, **caractérisée en ce que** les étriers de contact (72, 74) comprennent des branches de serrage (76, 78), destinées au blindage de câble, mobiles de manière élastique radialement à un axe médian (10) du raccord de boîtier (10).

10. Traversée selon la revendication 9, **caractérisée en ce que** les étriers de contact (72, 74) présentent des branches de serrage (76, 78) s'étendant de façon approximativement parallèle à une face (108) transversale à l'axe médian (16) du raccord de boîtier (10).

11. Traversée de câble selon l'une quelconque des revendications 1 à 6, **caractérisée en ce que** les étriers de contact (112) en contact avec le blindage de câble s'étendent vers l'intérieur d'une perforation centrale (96) du tronçon de fixation (12).

12. Traversée de câble selon la revendication 11, **caractérisée en ce que** les étriers de contact (112) présentent des branches de contact (116) recourbées en direction d'un axe médian (16) de l'élément de fixation (12).

13. Traversée de câble selon l'une quelconque des revendications 11 ou 12, **caractérisée en ce que** les étriers de contact (112) enserrent la face d'extrémité (106) du tronçon de fixation (12) en partant du tronçon de maintien (60).

14. Traversée de câble selon l'une quelconque des revendications 11 à 13, **caractérisée en ce que** les faces de contact de blindage (118) en contact avec le blindage de câble des étriers de contact (112) se trouvent à l'intérieur du tronçon de fixation (12).
